# EUROPEAN PATENT APPLICATION

(11) **EP 2 584 758 A1**
(43) Date of publication of application: **24.04.2013**
(21) Application number: 11466032.7
(22) Date of filing: 19.10.2011
(51) Int. Cl.: H04L 29/08, H04L 29/06

(54) **Method of interactive communication**

(71) Applicant: Santarius s.r.o., 736 01 Havirov, Mesto (CZ)
(72) Inventor: Santarius, Petr, 736 01 Havirov - Podlesi (CZ)
(74) Representative: Malusek, Jiri

(57) **Abstract**

Method of interactive communication provided by processing devices (X), which are connected by internet and equipped by communication software, and by microphone (V), acoustic source (Y) and displaying source (W), where at least one of the participants of the communication is provided by a videocamera (Z), which records the same momentary visual direction of a view as it is the visual direction of the view of said participant, whereas individual components (X, Y, V, W, Z) are mutually data interconnected.

## Description

### Background of invention

The invention concerns the method of interactive communication, e.g. for trading on the internet.

### State of the art

Sufficiency of informations about sold items, objects or services during trading on internet is important. Common presentations on web pages present just photos and written descriptions of those commodities and it is not sufficient for clear imagination for the customer. Such web pages could discourage a buyer from buying it. E.g. real estate agencies are able to offer a full photodocumentation of offered houses, but the customer can't obtain three-dimensionaly impression about it, e.g. how snapped parts relate to each other in the space. So the photos are confusing and it is uneasy to create the impression about the whole object.

So the brokers often prepare videorecordings of offered houses and then they put those records on their web sites and they try to offer the whole impression about it by parallel phone conversation with customer. However, interested persons have different needs about details, which they want to see. Therefore, pre-made recordings do not accomplish with all their demands. In particular, the seller could keep behind eventual imperfections, which is buyer able to found out only by personal inspection on site and this could discourage the buyer from buying it.

An analogical situation arises during presentation and selling of any goods and services in interiours, e.g. in classic shops/e-shops, such as in shops of sport, textile, shoes, electro, furniture etc., as well as in exteriours, e.g. by presentation and selling of used cars in car-secondhands, by presentation of a neighbourhood of hotels or another housings, lands, sport-grounds, ships in harbours etc.

The aim of the present invention is to present such method of interactive communication, which will be able to provide in a real time an audio/video communication between individual participants, with posibility to demonstrate e.g. goods, services or objects according to the wishes of customers.

### Feature of the invention

The above mentioned disadvantages are considerably eliminated by use of the method of interactive communication according to the invention, wherein at least one of the participants of the communication is provided by a videocamera, which records the the scene in the same momentary visual direction of a view as it is the visual direction of the view of said participant, whereas individual components are mutually data interconnected.

In an advantageous embodiment the processing devices are mobile phones or/and PDAs or/and computers or/and their combinations, whereas at least one of participants of communication is provided by a videocamera, which records the scene in same momentary visual direction of a wiev as is a visual direction of a wiev of this participant.

In another advantageous embodiment the data interconnection among individual components is provided by data cable.

In another advantageous embodiment the data interconnection among individual components is provided by wireless interconnection.

In another advantageous embodiment the wireless interconnection is provided by WiFi or/and internet or/and Bluetooth or/and data transmision provided by mobile operator or/and by its mutual combination.

In another advantageous embodiment functions of a microphone, an acustic source and a videocamera of at least one of participants of the communication, are unified into a presentation communication set, which consist of a head kit, a main transmitting/receiving unit and a computer transmitting/receiving unit, whereas the head kit consists of a bearing construction equiped by headphone, microphone and videocamera, whereas communication components are data interconnected with the main transmitting/receiving unit, which is intended to transmitte/receive a signal from/to the computer transmitting/receiving unit, which is data interconnected with a data processing computer, whereas the data processing computer is provided by comunication software.

In another advantageous embodiment the main transmitting/receiving unit is arranged on the bearing construction of the head kit.

In another advantageous embodiment the main transmitting/receiving unit is arranged on a belt of the participant.

### Description of the drawings

The invention will be further explained by using the drawings, in which Fig. 1 presents a schematic arrangement of used components intended for use the method of interactive communication according to the invention, Fig. 2 presents one of possible processing devices for use the method of interactive communication according to the invention and Fig. 3 presents the presentation communication set enabling to use the method of interactive communication according to the invention

### Preferred embodiments of the invention

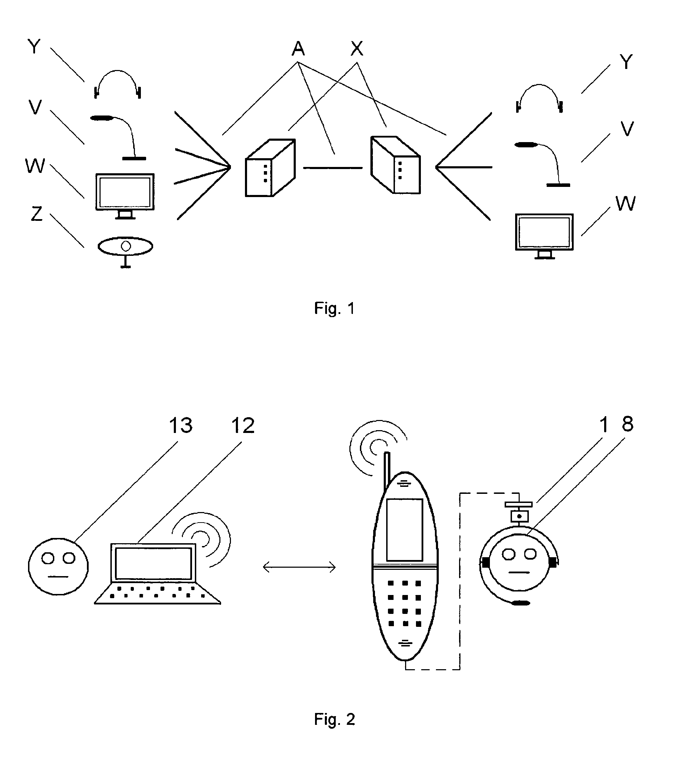

The interactive communication, according to the invention presented in Fig. 1, is based on simultaneous visual and audio both-sided communication provided by data processing device X equipped with communication program, which can be e.g. computers, smart phones, PDA (Personal Digital Assistent) etc., further provided by microphones V, acoustic sources Y, e.g. headphones or speakers, futher provided by displaying sources W, e.g. monitors, at least one videocamera Z, which records the the scene in the same momentary visual direction of a wiev as it is the visual direction of a wiev of the participant. Some of those components Y, V, W, Z can be part of the data processing components X. Comunication among individual components X, Y, V, W, Z is performed by data cables or/and by wireless interconnection by WiFi or/and bluetooth or/and internet or/and data transmision provided by mobilephone operators or/and by its mutual combination. The used communication software can be e.g. Skype.

The interactive communication according to the invention is applicable e.g. for an e-shop, for an object presentation in case of auction trading on internet, in case of necessity to show in detail the sold product to the custumer and eventually to discuss about those details. Possibility of the wireless interconnection shows especially its worth at the time of moving necessity of the seller in an interiour as well as in an exteriour. It increases the possibility of its applicability for above mentioned presentations and distributions.

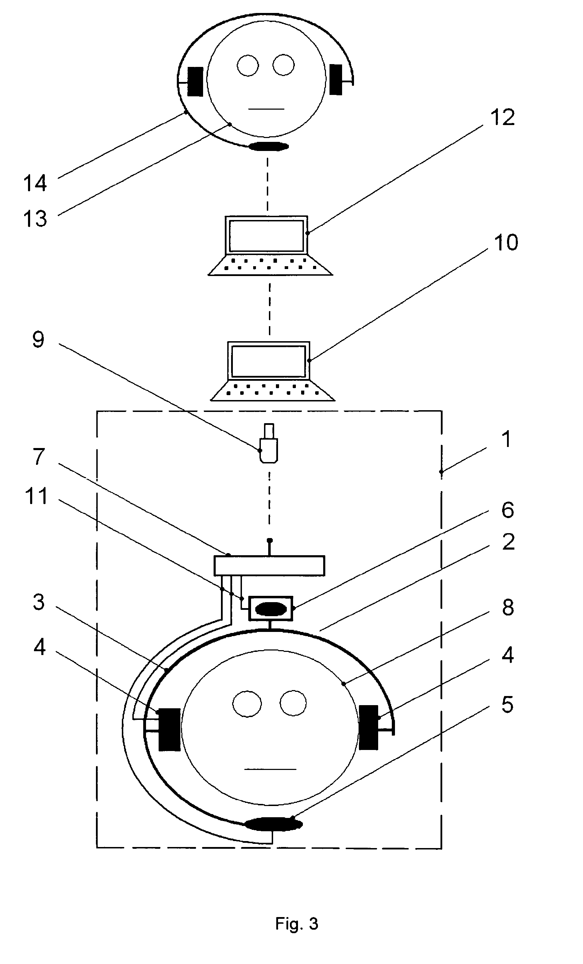

Fig. 2 illustrates one of a plurality variants of available communication devices intended for interactive comunication according to the invention. The buyer 13 has a laptop equipped by internet connection and by suitable software - Skype. The seller 8 has a smartphone equipped by internet connection and by necessary software - Skype, and a head kit 2 arranged on the head of the seller 8, see Fig. 3, which will be described hereinafter. The transmission of the information, between the participants 8 and 13, is performed by WiFi and then by the internet network, eventually only by internet network, whereas the connection between the head kit 2 and the smartphone is performed by bluetooth, thus wireless. The interconnection can be also performed by data cable.

Advantageously, for purpose of above mentioned interactive communication according to the invention, it is possible to use the presentation communication set 1, which is presented in Fig. 3, which consist of the head kit 2, which further consits of a bearing construction 3 equipped by headphones 4, a microphone 5 and by a videocamera 6. The presentation communication set 1 further consist of a main transmitting/receiving unit 7 equipped by voltage source, e.g. battery, advantageously arranged either on the bearing construction 3 of the head kit 2 or beside it, e.g. on a belt of the seller 8, and a computer transmitting/receiving unit 9, which is data interconnected with a data processing computer 10, e.g. by USB. The individual communication components 4, 5, 6, which are arranged on the bearing construction 3, are data interconnected with the main transmitting/receiving unit 7 by data cable 11, otherwise by whireless interconnection. The main transmitting/receiving unit 7 imparts a data to/from the computer transmitting/receiving unit 9. The data are sent wireless, e.g. by WiFi or bluetooth.

The data processing computer 10 is equipped by suitable communication software, e.g. Skype, and interconnected by internet with a receiving computer 12, which is equipped by same communication software, e.g. Skype. The receiving computer 12 is operated by the buyer 13, which is equipped by suitable communication device 14, such as a microphone, an acoustic source, a displaying source or an analogical head kit according to the head kit 2.

After connection of the data processing computer 10 to the internet, after turn on the communication software and after getting on the head kit 2, which is wireless connected to the data processing computer 10 with the computer transmitting/receiving unit 9 connected into it, the seller 8 can at the time of presentation or selling of any goots or services, freely move and communicate with the interested buyer 13.

However, application of the presentation communication set 1 is not limited only for e-shop. It is applicable also for a training programe for pilots, for an interactive broadcast of extreme sport activities or in case of car racings, where such communication between racer and team colleagues is necessary. In such case the operator 13, which is equipped by the communication device 14, operates directly the data processing computer 10.

## Claims

1. Method of interactive communication provided by processing devices (X), which are connected by internet and equipped by communication software, and by microphone (V), acoustic source (Y) and displaying source (W) **characterized in that,** at least one of the participants of the communication is provided by a videocamera (Z), which records the scene in the same momentary visual direction of a view as it is the visual direction of the view of said participant, whereas individual components (X, Y, V, W, Z) are mutually data interconnected.

2. Method of interactive communication according to the to clame 1 **characterized in that,** the processing devices (X) are mobile phones or/and PDAs or/and computers or/and their combinations, whereas at least one of participants of communication is provided by a videocamera (Z), which records the scene in same momentary visual direction of a wiev as is a visual direction of a wiev of this participant.

3. Method of interactive communication according to the clame 1 **characterized in that,** the data interconnection among individual components (X, Y, V, W, Z) is provided by data cable (A).

4. Method of interactive communication according to the clame 1 **characterized in that,** the data interconnection among individual components (X, Y, V, W, Z) is provided by wireless interconnection.

5. Method of interactive communication according to the clame 4 **characterized in that,** the wireless interconnection is provided by WiFi or/and internet or/and Bluetooth or/and data transmision provided by mobile operator or/and by its mutual combination.

6. Method of interactive communication according to the clame 1 **characterized in that,** functions of a microphone (V), an acustic source (Y) and a videocamera (Z) of at least one of participants of the communication, are unified into a presentation communication set (1), which consist of a head kit (2), a main transmitting/receiving unit (7) and a computer transmitting/receiving unit (9), whereas the head kit (2) consists of a bearing construction (3) equiped by headphone (4), microphone (5) and videocamera (6), whereas communication components (4, 5, 6) are data interconnected with the main transmitting/receiving unit (7), which is intended to transmitte/receive a signal from/to the computer transmitting/receiving unit (9), which is data interconnected with a data processing computer (10), whereas the data processing computer (10) is provided by comunication software.

7. Method of interactive communication according to the clame 6 **characterized in that,** the main transmitting/receiving unit (7) is arranged on the bearing construction (3) of the head kit (2).

8. Method of interactive communication according to the clame 6 **characterized in that,** the main transmitting/receiving unit (7) is arranged on a belt of the participant (8).
